## Europäisches Patentamt
## European Patent Office
## Office européen des brevets

(19)

(11) Veröffentlichungsnummer: **0 073 014**
**B1**

(12) **EUROPÄISCHE PATENTSCHRIFT**

(45) Veröffentlichungstag der Patentschrift:
**13.11.85**

(51) Int. Cl.⁴: **H 04 Q 7/00**

(21) Anmeldenummer: **82107529.8**

(22) Anmeldetag: **18.08.82**

(54) Verfahren zum Zugreifen auf Übertragungskanäle eines Nachrichtenübertragungssystems.

(30) Priorität: **22.08.81 DE 3133347**

(43) Veröffentlichungstag der Anmeldung:
**02.03.83 Patentblatt 83/9**

(45) Bekanntmachung des Hinweises auf die Patenterteilung:
**13.11.85 Patentblatt 85/46**

(84) Benannte Vertragsstaaten:
**AT BE CH DE FR GB IT LI LU NL SE**

(56) Entgegenhaltungen:
**DE - A - 2 537 683**
**DE - B - 1 295 599**
**GB - A - 2 063 011**
**US - A - 3 458 664**

(73) Patentinhaber: **Felten & Guilleaume Fernmeldeanlagen GmbH, Thurn-und-Taxis-Strasse 10 Postfach 4943, D-8500 Nürnberg 10 (DE)**

(72) Erfinder: **Grauel, Christoph, Dr. Ing., Andreas-Schramm-Strasse 14, D-8501 Feucht (DE)**
Erfinder: **Schmidt, Werner, Dr. Ing., Schustergasse 1, D-8501 Heroldsberg (DE)**

(74) Vertreter: **Peuckert, Hermann, Philips Patentverwaltung GmbH Billstrasse 80 Postfach 10 51 49, D-2000 Hamburg 28 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum Zugreifen auf Übertragungskanäle eines Nachrichtenübertragungssystems mit mindestens einer zentralen Einrichtung, mit mindestens einem Duplex-Übertragungskanal zur Übertragung der Signalisierung und einer Vielzahl voneinander unabhängiger Teilnehmerstationen, bei dem die Teilnehmerstationen nach einem Vielfachzugriff-Verfahren auf den Duplex-Übertragungskanal zugreifen können und auf den Duplex-Übertragungskanal eine Vielzahl von Teilnehmerstationen mit der zentralen Einrichtung einen Informationsaustausch durchführen können.

Als Beispiel für ein derartiges Nachrichtensystem sei ein System zur Übertragung von Nachrichten über Funkstrecken genannt. Aus der DE-OS 2 537 683 ist ein Funkübertragungssystem mit ortsfesten Funkstationen und beweglichen Teilnehmerstationen bekannt. Dabei ist jeder ortsfesten Funkstation (zentralen Einrichtung) ein Satz von Duplex-Übertragungskanälen zugeordnet. Einer (der Dienstkanal) wird zur Übertragung von Steuerungsinformationen für den Betriebsablauf und die übrigen (die Sprechkanäle) werden zur Sprachübertragung verwendet. Im folgenden wird die Übertragungsrichtung von den Teilnehmerstationen zur zentralen Einrichtung als Hin-Richtung, die umgekehrte Übertragungsrichtung als Rück-Richtung bezeichnet. Der Betriebsablauf und verschiedene Kanalzugriff-Verfahren sind in der DE-OS 2 537 683 beschrieben.

Zu Beginn jeder Übertragung von einer Teilnehmerstation zur zentralen Einrichtung wird auf dem Dienstkanal (Duplex-Übertragungskanal) in Hin-Richtung zunächst die eigene Fahrzeugkennung (Identifizierung) gesendet. Senden zwei oder mehrere Teilnehmerstationen ihre jeweilige Identifizierung gleichzeitig auf dem Dienstkanal, so kann keine dieser Identifizierungen in der zentralen Einrichtung erkannt werden, außer eine der Identifizierungen wird mit erheblich höherer Leistung als alle anderen empfangen.

Mit wachsender Anzahl von Teilnehmerstationen steigt die Wahrscheinlichkeit, daß mehrere Teilnehmerstationen gleichzeitig auf den Dienstkanal zugreifen wollen. Da der Dienstkanal von allen Teilnehmerstationen gemeinsam benutzt werden muß, ist die Wahrscheinlichkeit für gleichzeitige Zugriffe auf diesen und damit die Zerstörungswahrscheinlichkeit besonders groß.

Eine weitere Vergrößerung der Zerstörungswahrscheinlichkeit ergibt sich durch die Wiederholung von Zugriffen aufgrund von nicht erkannten Identifizierungen. Bei jeder Zugriffszerstörung ist der Übertragungskanal mindestens für die Dauer einer Identifizierung nicht nutzbar, also blockiert. Der zeitliche Anteil der Blockierung des Dienstkanals durch Zugriffszerstörungen wächst zusätzlich mit der Länge der Identifizierung, d. h. mit der Zahl der im gesamten Nachrichtensystem zuzulassenden Teilnehmerstationen.

Bei häufigen und kurzen Übertragungen wird wegen der genannten Effekte die Kapazität des Duplex-Übertragungskanals nur zu einem geringen Teil genutzt.

Aus der US-PS 3 458 664 ist ein weiteres Zugriffsverfahren zum Zugreifen auf einen Duplex-Übertragungskanal in einem Funkübertragungssystem bekannt. Will eine Teilnehmerstation auf den Übertragungskanal zugreifen, so sendet diese ein besonderes Zeichen, welches als connect tone bezeichnet ist. Voraussetzung für die Sendung des connect tone ist, daß der Übertragungskanal frei ist. Empfängt die zentrale Einrichtung einen solchen connect tone über den Übertragungskanal, so nimmt diese ein bestimmtes Zeichen, als idle tone bezeichnet, vom Übertragungskanal weg. Die Wegnahme dieses idle tone ist für alle Teilnehmerstationen das Kriterium dafür, sich einen anderen Übertragungskanal zu suchen, welcher den idle ton sendet. Die zentrale Einrichtung sendet zu einem späteren Zeitpunkt den sogenannten seize tone, welcher in der Teilnehmerstation anzeigt, daß die zentrale Einrichtung den connect tone empfangen hat und nun bereit ist, das Signalisierungszeichen (Identifizierung) der Teilnehmerstation zu empfangen.

Die Teilnehmerstationen werden bei dem aus der US-PS 3 458 664 bekannten Zugriffsverfahren nicht durch den gesendeten connect tone gekennzeichnet. Senden deshalb zwei verschiedene Teilnehmerstationen in miteinander überlappenden Zeiträumen den connect tone, so ist für diese Teilnehmerstationen die Wegnahme des idle tone durch die zentrale Einrichtung keine Aufforderung dafür den Übertragungskanal zu verlassen. Sendet die zentrale Einrichtung also den seize tone und nimmt diesen vom Übertragungskanal wieder weg, so werden beide Teilnehmerstationen mit der Übertragung der vollständigen Identifizierung beginnen und somit liegt eine Zugriffszerstörung vor.

Aufgabe der Erfindung ist es, ein Verfahren zum Zugreifen auf Übertragungskanäle eines Nachrichtensystems der eingangs genannten Art derart anzugeben, daß die Nutzbarkeit eines Duplex-Übertragungskanals erhöht wird.

Diese Aufgabe wird erfindungsgemäß dadurch gelöst, daß die Teilnehmerstationen zur Einleitung der von ihnen ausgehenden Übertragungen den Duplex-Übertragungskanal mit Signalisierungs-Kurzzeichen belegen und daß daraufhin die zentrale Einrichtung, die durch die Signalisierungs-Kurzzeichen gekennzeichneten Teilnehmerstationen nacheinander zur vollständigen Identifizierung auffordert und damit eine Informationsübertragung von und zu den Teilnehmerstationen einleitet.

Das Verfahren gemäß der Erfindung weist den Vorteil auf, daß der freie Zugriff einer Teilnehmerstation auf den Duplex-Übertragungskanal nicht mit einer vollständigen Identifizierung, sondern mit einem wesentlich kürzeren Signal erfolgt. Dieses Signalisierungs-Kurzzeichen teilt der zentralen Einrichtung mit, daß ein Übertragungswunsch von einer Teilnehmerstation besteht. Die vollständige und eindeutige Identifizierung dieser Teilnehmerstation kann dann, wie auch gegebenenfalls die Übertragung weiterer Nutzinformation, unter Koordination durch die zentrale Einrichtung, z. B. Warteschlangenbildung, zu einem späteren Zeitpunkt auf dem gleichen oder einem anderen Übertragungskanal erfolgen.

Die Unteransprüche 2 bis 4 geben Ausgestaltungen des Verfahrens hinsichtlich der Art und Weise an, wie die zentrale Einrichtung nach Empfang eines Signalisierungs-Kurzzeichens die betreffende Teilnehmerstation zur vollständigen Identifizierung auffordert. Dazu muß ein sowohl der zentralen Einrichtung als auch der Teilnehmerstation bekanntes Kennzeichen des Signalisierungs-Kurzzeichens verwendet werden. Dieses Kennzeichen dient in der zentralen Einrichtung zur Unterscheidung zwischen den Teilnehmerstationen, die während eines bestimmten Zeitraums mit Signalisierungs-Kurzzeichen tatsächlich zugegriffen haben und damit eine Nachrichtenübertragung wünschen. Die Gefahr von Zugriffszerstörungen und damit derjenige Zeitanteil, für den der Duplex-Übertragungskanal nur gering nutzbar ist, wird durch die Verkürzung der Dauer des einzelnen Zugriffs verringert. Damit wird die mögliche Nutzbarkeit des Übertragungskanals mit Nutzinformation wesentlich erhöht.

Nach den Unteransprüchen 2 oder 3 kann zur teilweisen Identifizierung die zeitliche Lage oder der Informationsinhalt des Signalisierungs-Kurzzeichens oder beides verwendet werden. Die Auswirkungen von trotzdem vorkommenden gleichzeitigen Zugriffen oder von auf dem Übertragungskanal vorhandenen und Zugriffe vortäuschenden Störungen kann vermindert werden (Unteranspruch 3). Die Teilnehmerstationen können jeweils eines von verschiedenen Signalisierungs-Kurzzeichen auswählen. Die zentrale Einrichtung gibt in der Aufforderung zur Identifizierung auch die Art des von der Teilnehmerstation beim Zugriff verwendeten Signalisierungs-Kurzzeichen an.

Eine weitere Verbesserung der Kanalausnutzung ergibt sich nach Unteranspruch 4, wenn die zentrale Einrichtung nur dann eine Identifizierungsaufforderung sendet, wenn ein Signalisierungs-Kurzzeichen mit hinreichender Empfangsqualität erkannt wurde. Durch diese Erkennung von Zugriffszerstörungen oder -vortäuschungen sowie von Zugriffen mit zu geringer Leistung werden keine Zeiträume des Duplex-Übertragungskanals für ohnedies erfolglose Identifizierungen freigehalten.

Weiterhin erhöht sich die Nutzbarkeit von zugriffsgesperrten Zeiten (Zeiträume, während derer der freie Zugriff für andere Teilnehmerstationen gesperrt ist), wenn die zur Identifizierung aufgeforderte Teilnehmerstation die ihr hierfür zur Verfügung gestellte Zeit möglichst gut nutzt. Eine Teilnehmerstation benötigt eine gewisse Reaktionszeit, z. B. zur Auswertung der Identifizierungsaufforderung, bevor sie ihre Identifizierung senden kann. Gemäß Unteranspruch 5 oder Unteranspruch 6 wird eine vom System festgelegte oder eine fallweise von der zentralen Einrichtung zu bestimmende Verzögerung zwischen Übertragungen in Rück-Richtung (z. B. Aufforderung zur vollständigen Identifizierung) und den zugehörigen Übertragungen in Hin-Richtung (z. B. Identifizierung) verwendet, um die genannte Reaktionszeit für andere Zwecke nutzen zu können.

Die Unteransprüche 7 bis 9 geben mögliche Ausführungen für die Koordination zur Konzentration des Nutzverkehrs an. Bei einem Verfahren gemäß Unteranspruch 7 und 8 wird ein Übertragungskanal sowohl für Zugriffe der Teilnehmerstationen während der für freie Zugriffe erlaubten Zeiträume, als auch zur Übertragung von Nutzinformationen während der für freie Zugriffe gesperrten Zeiträume verwendet. Eine Zerstörung der Nutzinformation durch freie Zugriffe anderer Teilnehmerstationen wird dabei gemäß einem Verfahren nach Unteranspruch 15 weitgehend, bei einem Verfahren gemäß einem der Unteransprüche 7 bis 9, völlig vermieden.

Die Wahrscheinlichkeit der gegenseitigen Zerstörung von Signalisierungs-Kurzzeichen ist geringer, wenn während der für Zugriffe erlaubten Zeiten die Zugriffe möglichst gleichmäßig verteilt erfolgen. Gemäß Unteranspruch 10 greift eine Teilnehmerstation nach Erkennen der Erlaubnis zum freien Zugriff nicht unbedingt sofort zu. Der genaue Zeitpunkt zum Senden des Signalisierungs-Kurzzeichens wird z. B. zufällig ausgewählt.

Eine einfache Realisierung der Abläufe in der Teilnehmerstation ergibt sich, wenn gemäß Unteranspruch 13 der Duplex-Übertragungskanal in Hin- und Rück-Richtung in Zeitschlitze gleicher Länge aufgeteilt wird. Jeder für freie Zugriffe erlaubte Zeitschlitz wird gemäß Unteranspruch 12 in eine Anzahl von kurzen sogenannten Rufschlitzen unterteilt, wobei die Zeitdauer eines Rufschlitzes mindestens der, für alle Teilnehmerstationen gleichen, Dauer eines Signalisierungs-Kurzzeichens (Unteransprüche 11 bis 13) entspricht.

Gemäß Unteranspruch 14 besteht die Möglichkeit, in manchen oder allen Übertragungen der zentralen Einrichtung, insbesondere solchen zu einer bestimmten (bereits vollständig identifizierten) Teilnehmerstation, einen Zeitraum vorzusehen. Dieser kann für eine Identifizierungsaufforderung an eine andere Teilnehmerstation, die mit einem Signalisierungs-Kurzzeichen zugegriffen hatte, verwendet werden. Anstelle einer solchen Identifizierungsaufforderung in dem in einer Meldung vorgesehenen Zeitraum kann auch eine Freigabe-Markierung bzw. eine Sperre-Markierung 8 eingetragen werden.

Die Erfindung wird im folgenden anhand der Fig. 1 bis 4 für eine Anwendung bei einem Funkfernsprechdienst näher beschrieben und erläutert. Es zeigt

Fig. 1 die Organisation eines Kanals,

Fig. 2 den Ablauf eines Zugriffs auf den Dienstkanal,

Fig. 3a, 3b, 3c die Dialoge zwischen Teilnehmerstation und zentraler Einrichtung beim Gesprächsaufbau, bei Anwesenheitsmitteilung und bei Ummeldung und

Fig. 4 einen Zeitabschnitt des Dienstkanals mit verschiedenen Dialogen gemäß der Erfindung.

Bei einem Funkfernsprechdienst sind ortsfeste Funkstationen (die zentralen Einrichtungen) räumlich nach einem Zellensystem geordnet. Ein von einer Funkstation versorgtes geographisches Gebiet wird auch als Funkzone bezeichnet. Jeder Funkstation (und damit jeder Funkzone) ist eine Anzahl von Duplex-Übertragungskanälen, auch Funkkanäle genannt, zugeordnet. Von diesen wird mindestens ein Kanal, der Dienstkanal, für Signalisierungen zur Steuerung der Systemfunktionen verwendet. Dazu gehört z. B. die Übertragung von Wahlinformationen beim Aufbau von Gesprächen von und zu mobilen Teilnehmerstationen sowie von Aufenthaltsmeldungen der mobilen Teilnehmerstationen zur Mitteilung ihrer Erreichbarkeit. Auf diesen Dienstkanal wird das erfindungsgemäße Verfahren angewendet, um eine möglichst große Zahl von mobilen Teilnehmerstationen ohne Bereitstellung weiterer Dienstkanäle bedienen zu können, damit Funkkanäle einzusparen und einen Beitrag zur Frequenzökonomie zu leisten.

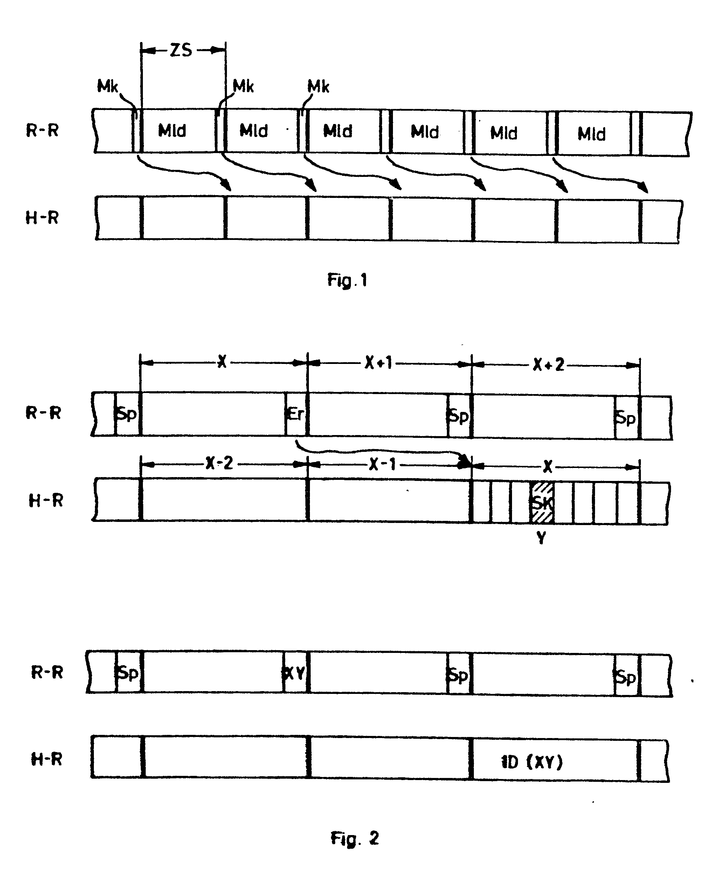

Wie in Fig. 1 dargestellt, ist jeder Dienstkanal in jeder Übertragungsrichtung in eine Folge von gleichlangen Zeitschlitzen unterteilt. Jedem Zeitschlitz ZS in Rück-Richtung R-R (von der ortsfesten Funkstation zu den mobilen Teilnehmerstationen) ist der übernächste Zeitschlitz in Hin-Richtung H-R (von den mobilen Teilnehmerstationen zur ortsfesten Funkstation) fest zugeordnet. Dies ist in Fig. 1 durch gepfeilte Linien angedeutet. Eine entsprechende Zuordnung zwischen Hin-Richtung H-R und Rück-Richtung R-R wird nicht vorgenommen. Die ortsfeste Funkstation sendet in der Rück-Richtung R-R kontinuierlich Meldungen Mld mit fester Zeitdauer aus, welche einem Zeitschlitz ZS entspricht. In jeder Meldung Mld der Rück-Richtung R-R ist eine Markierung Mk enthalten, die über den Verwendungszweck des zugeordneten Zeitschlitzes ZS der Hin-Richtung H-R Auskunft gibt. Die Markierung Mk kann eine der folgenden drei Bedeutungen haben:

Er = Erlaubnis für freie Zugriffe von mobilen Teilnehmerstationen mittels Signalisierungs-Kurzzeichen im zugeordneten Zeitschlitz

Sp = Sperre des zugeordneten Zeitschlitzes ZS für freie Zugriffe

XY = Aufforderung zur vollständigen Identifizierung im zugeordneten Zeitschlitz ZS für diejenige mobile Teilnehmerstation, die mit dem durch XY gekennzeichneten Signalisierungs-Kurzzeichen zugegriffen hatte. Für alle anderen mobilen Teilnehmerstationen entspricht dies einer Zugriffssperre.

Jeder für freie Zugriffe erlaubte Zeitschlitz ZS wird durch Festlegung im System in eine bestimmte Anzahl von z. B. acht Rufschlitzen unterteilt. Ebenfalls durch Systemfestlegung wird für alle mobilen Teilnehmerstationen eine einheitliche Dauer der Signalisierungs-Kurzzeichen SK vereinbart.

In Fig. 2 ist der Ablauf eines Zugriffs auf den Dienstkanal dargestellt. Will eine mobile Teilnehmerstation auf den Dienstkanal zugreifen, so wartet sie zunächst auf eine Freigabe-Erlaubnis Er zum freien Zugriff auf den, der Freigabe-Erlaubnis Er zugeordneten (durch gepfeilte Linie angedeutet) Zeitschlitz der Hin-Richtung H-R. Dieser Zeitschlitz sei mit X bezeichnet und ist nach Vereinbarung z. B. in acht Rufschlitze unterteilt. Von diesen Rufschlitzen wählt sich die mobile Teilnehmerstation zufällig einen, im folgenden mit Y bezeichneten, Rufschlitz aus und sendet darin ihr Signalisierungs-Kurzzeichen. Dieses besteht z. B. aus einem für alle mobilen Teilnehmerstationen einheitlichen Bitmuster und bietet daher keine Unterscheidungsmöglichkeit. Die durch das Wertepaar XY gekennzeichnete zeitliche Lage des Signalisierungs-Kurzzeichens ist damit sowohl der mobilen Teilnehmerstation als auch der ortsfesten Funkstation bekannt. Die Aufforderung zur vollständigen Identifizierung besteht nun in der Angabe von XY als Markierung mit der bereits erläuterten Bedeutung. Der dieser Markierung fest zugeordnete übernächste Zeitschlitz steht allein der aufgeforderten mobilen Teilnehmerstation zur Verfügung, um in einer Meldung ID(XY) ihre vollständige Identifizierung sowie die Art des von ihr gewünschten Dialogs mit der ortsfesten Funkstation zu senden.

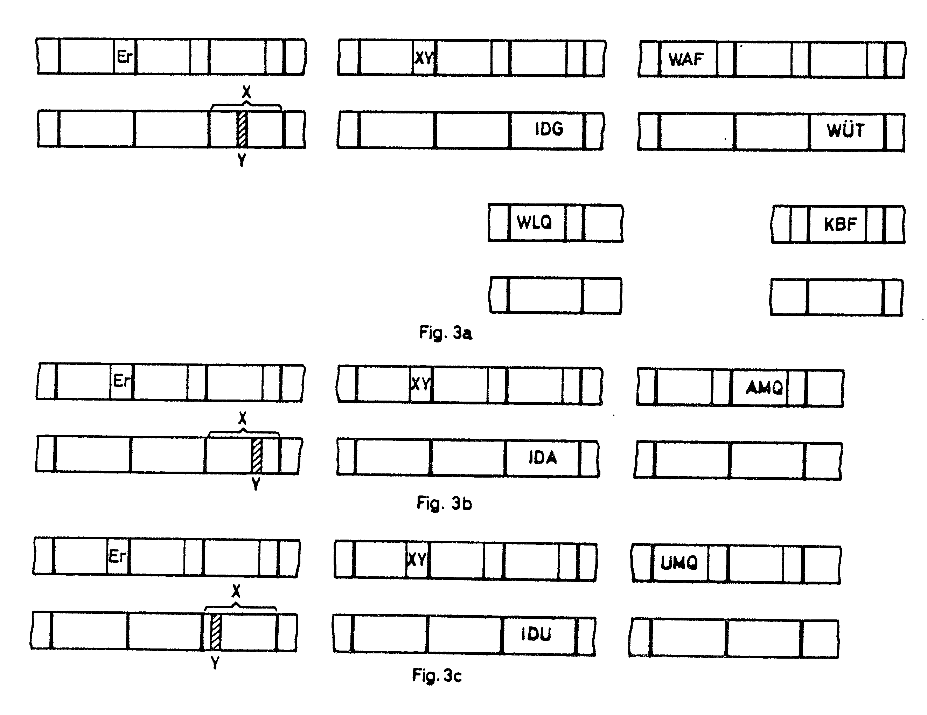

In Fig. 3a, 3b und 3c sind verschiedene Dialogarten dargestellt. Als Dialogarten seien z. B. vorgesehen:

1. Aufbau eines Gesprächs von einer mobilen Teilnehmerstation zu einem festen Teilnehmer des Telefonnetzes (Fig. 3a),

2. Anwesenheitsmitteilung bei Betriebsbereitschaft der mobilen Teilnehmerstation (Fig. 3b) und

3. Ummeldung beim Wechsel von einer Funkzone in eine andere (Fig. 3c).

Jeder dieser Dialoge besteht aus mindestens zwei Meldungen und kann wie nachfolgend beschrieben aufgebaut sein.

### 1. Gesprächsaufbau

Nach Erhalt der Identifizierungsaufforderung sendet, in Fig. 3a mit IDG bezeichnet, die mobile Teilnehmerstation in der Hin-Richtung H-R ihre vollständige Identifizierung sowie den Hinweis, daß sie ein Gespräch aufbauen will. Nach einer gewissen Zeit quittiert die ortsfeste Funkstation die Identifizierung und fordert, in Fig. 3a mit WAF beschrieben, die mobile Teilnehmerstation zur Übertragung einer Wahlinformation auf. Darauf nimmt die mobile Teilnehmerstation im übernächsten Zeitschlitz die Übertragung einer Wahlinformation WÜT vor. Die ortsfeste Funkstation quittiert dies mit einer Wahlquittung WLQ und beginnt mit dem Aufbau der gewünschten Verbindung. Wenn sich der gerufene Teilnehmer meldet, verweist die ortsfeste Funkstation mit einem Kanalbefehl KBF auf einen für das Gespräch vorgesehenen Sprechkanal.

## 2. Anwesenheitsmitteilung

Beim Einschalten oder in bestimmten Zeitabständen während der Betriebsbereitschaft teilt die mobile Teilnehmerstation der ortsfesten Funkstation mit, daß sie in deren Funkzone für Rufe erreichbar ist. Nach erfolgreichem Zugriff auf den Dienstkanal und der Aufforderung zur vollständigen Identifizierung sendet die mobile Teilnehmerstation eine Anwesenheitsmitteilung IDA, die die vollständige Identifizierung enthält. Diese Mitteilung IDA wird von der ortsfesten Funkstation durch eine Quittung AMQ bestätigt, womit der Dialog abgeschlossen ist.

## 3. Ummeldung

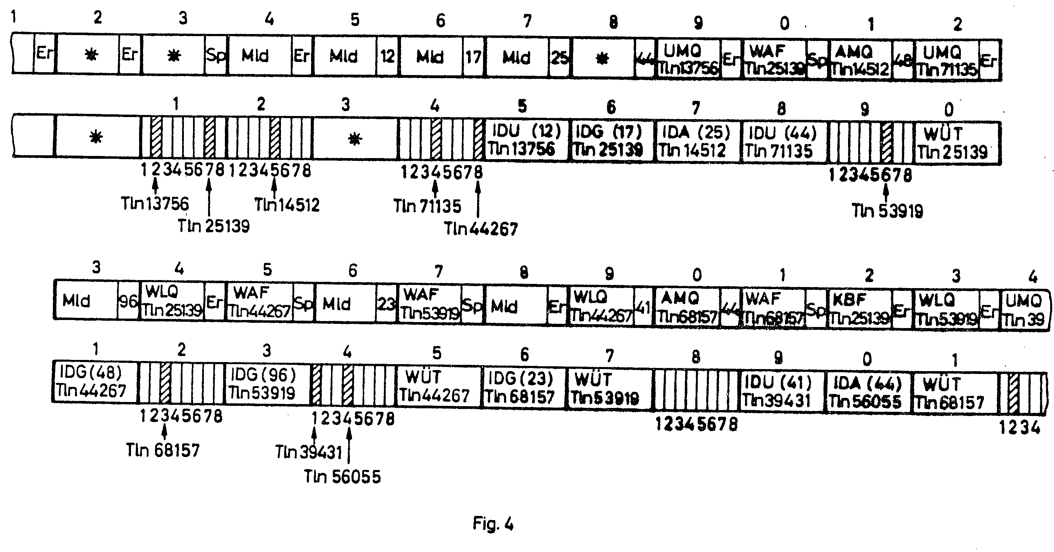

Wechselt eine mobile Teilnehmerstation die Funkzone, so muß sie derjenigen ortsfesten Funkstation, in deren Funkzone sie sich begibt, den Funkzonenwechsel mitteilen, damit sie für Rufe erreichbar bleibt. Der notwendige Dialog entspricht dem der Anwesenheitsmitteilung (2.) wobei die Meldungen IDA duch Ummeldung mit Identifizierung IDU und AMQ duch Ummeldequittung UMQ ersetzt werden. In den Meldungen IDG, IDA und IDU nimmt wegen der großen Anzahl von im gesamten System zuzulassenden mobilen Teilnehmerstationen die Identifizierung den größten Teil ein. Im Vergleich dazu fällt die Information zur Unterscheidung der Dialogarten kaum ins Gewicht. Neben den genannten Meldungen WAF, WLQ, KBF, AMQ und UMQ gibt es in Rück-Richtung R-R noch weitere Meldungen für andere Systemfunktionen. Diese Systemfunktionen sollen hier nicht weiter unterschieden werden und sind in den Figuren (Fig. 1 und 4) mit MId bezeichnet.

In Fig. 4 ist ein Zeitabschnitt des Dienstkanals mit verschiedenen Dialogen dargestellt. Die verschiedenen Dialoge werden mit mehreren mobilen Teilnehmerstationen Tln zeitlich verschachtelt abgewickelt. Die mit * gekennzeichneten Zeitschlitze stellen Teile von Dialogen dar, die vor Beginn des in Fig. 4 dargestellten Zeitabschnitts begonnen wurden. Die Numerierung der Zeitschlitze wird zyklisch mit den Ziffern 0 bis 9 vorgenommen. Die Aufforderung XY zur vollständigen Identifizierung besteht daher aus zwei Ziffern. Die erste Ziffer X bezeichnet die Nummer des Rufschlitzes (im Zeitschlitz X), in dem das Signalisierungs-Kurzzeichen gesendet wurde. Bei der Realisierung kann es im Gegensatz zu dieser vereinfachten Darstellungsweise günstiger sein, mit der Nummer X die Zahl der seit dem Senden des Signalisierungs-Kurzzeichen vergangenen Zeitschlitze anzugeben. Aus Fig. 4 ist ersichtlich, daß

— die für freie Zugriffe gesperrte Zeit vollständig für die Übertragung von Nutzinformation (Meldungen) ausgenutzt werden kann,
— nur ein relativ geringer Teil der Kapazität des Dienstkanals für freie Zugriffe zur Verfügung gestellt werden muß,
— dennoch nur ein geringer Teil der verfügbaren Rufschlitze mit Signalisierungs-Kurzzeichen belegt ist, woraus eine geringe Zerstörungswahrscheinlichkeit folgt und damit,
— insgesamt durch das erfindungsgemäße Verfahren eine hohe Nutzbarkeit (Auslastbarkeit) des Dienstkanals bei geringer Wahrscheinlichkeit von Zugriffszerstörungen erzielt wird.

Das erfindungsgemäße Verfahren bietet zudem eine Reihe von Vorteilen für die Realisierung der Steuerungsabläufe insbesondere in der mobilen Teilnehmerstation.

## Patentansprüche

1. Verfahren zum Zugreifen auf Übertragungskanäle eines Nachrichtenübertragungssystems mit mindestens einer zentralen Einrichtung, mit mindestens einem Duplex-Übertragungskanal zur Übertragung der Signalisierung und einer Vielzahl voneinander unabhängiger Teilnehmerstationen, bei dem die Teilnehmerstationen nach einem Vielfachzugriff-Verfahren auf den Duplex-Übertragungskanal zugreifen können und auf den Duplex-Übertragungskanal eine Vielzahl von Teilnehmerstationen mit der zentralen Einrichtung einen Informationsaustausch durchführen können, dadurch gekennzeichnet, daß die Teilnehmerstationen zur Einleitung der von ihnen ausgehenden Übertragungen den Duplex-Übertragungskanal mit Signalisierungs-Kurzzeichen belegen und daß daraufhin die zentrale Einrichtung, die durch die Signalisierungs-Kurzzeichen gekennzeichneten Teilnehmerstationen nacheinander zur vollständigen Identifizierung auffordert und damit eine Informationsübertragung von und zu den Teilnehmerstationen einleitet.

2. Verfahren nach Anspruch 1, dadurch gekennzeichnet, daß von der zentralen Einrichtung als Kennzeichen der Teilnehmerstation die zeitliche Lage des Signalisierungs-Kurzzeichens herangezogen wird.

3. Verfahren nach Anspruch 1, dadurch gekennzeichnet, daß von der zentralen Einrichtung als Kennzeichen der Teilnehmerstation die Art des verwendeten Signalisierungs-Kurzzeichens herangezogen wird.

4. Verfahren nach Anspruch 1, dadurch gekennzeichnet, daß die zentrale Einrichtung die Empfangsqualität der Signalisierungs-Kurzzeichen ermittelt und davon abhängig eine Aufforderung zur vollständigen Identifizierung sendet oder nicht.

5. Verfahren nach Anspruch 1, dadurch gekennzeichnet, daß jede Informationsübertragung in Richtung zur zentralen Richtung eine feste Verzögerung gegenüber der Informationsübertragung in Richtung zu den Teilnehmerstationen aufweist.

6. Verfahren nach Anspruch 1, dadurch gekennzeichnet, daß von der zentralen Einrichtung von Fall zu Fall für jede Informationsübertragung in Richtung zur zentralen Einrichtung eine Verzögerung gegenüber der Informationsübertragung in Richtung zu den Teilnehmerstationen festgelegt und diese den Teilnehmerstationen mitgeteilt wird.

7. Verfahren nach Anspruch 1, dadurch gekennzeichnet, daß der Duplex-Übertragungskanal in für freie Zugriffe erlaubte und gesperrte Zeiträume unterteilt wird und daß eine Teilnehmerstation nach Erhalt der Aufforderung zur vollständigen Identifizierung diese Identifizierung sowie die weitere Informationsübertragung nur während der für freie Zugriffe gesperrten Zeiträume vornimmt.

8. Verfahren nach Anspruch 1, dadurch gekennzeichnet, daß die zentrale Einrichtung in Richtung zu den Teilnehmerstationen Markierungen sendet, welche festlegen, in welchen Zeiträumen die Teilnehmerstationen auf den Duplex-Übertragungskanal mit Signalisierungs-Kurzzeichen zugreifen dürfen.

9. Verfahren nach Anspruch 1, dadurch gekennzeichnet, daß der Teilnehmerstation ein für freie Zugriffe gesperrter Übertragungskanal bekanntgemacht wird, auf dem sowohl die Teilnehmerstation nach Erhalt der Aufforderung zur vollständigen Identifizierung diese sendet als auch die weitere Informationsübertragung stattfindet.

10. Verfahren nach Anspruch 1, dadurch gekennzeichnet, daß die Teilnehmerstation zur Einleitung einer von ihr ausgehenden Verbindung, innerhalb eines für freie Zugriffe erlaubten Zeitraums, den genauen Zeitpunkt, zu dem sie mit der Übertragung eines Signalisierungs-Kurzzeichens beginnt, zufällig oder nach einem definierten Algorithmus auswählt.

11. Verfahren nach Anspruch 1, dadurch gekennzeichnet, daß die von den Teilnehmerstationen verwendeten Signalisierungs-Kurzzeichen alle die gleiche Zeitdauer aufweisen.

12. Verfahren nach Anspruch 11, dadurch gekennzeichnet, daß die Zeiträume, in denen die Teilnehmerstationen mit Signalisierungs-Kurzzeichen zugreifen dürfen, in Rufschlitze unterteilt werden, deren zeitliche Länge zu der Zeitdauer der Signalisierungs-Kurzzeichen in einem festen Verhältnis stehen.

13. Verfahren nach Anspruch 1, dadurch gekennzeichnet, daß der Duplex-Übertragungskanal in jeder Übertragungsrichtung in eine Folge von Zeitschlitzen unterteilt ist.

14. Verfahren nach Anspruch 1, dadurch gekennzeichnet, daß die Aufforderung zur vollständigen Identifizierung an eine Teilnehmerstation, die sich mit einem Signalisierungs-Kurzzeichen gemeldet hat, Teil einer von der zentralen Einrichtung ausgehenden, beliebigen Übertragung ist.

**Claims**

1. A method of acessing transmission channels of a message transmission system comprising at least one central arrangement, at least one duplex-transmission channel for transmitting signalling signals and a plurality of subscriber stations which are independent of each other, in which method the subscriber stations are capable of accessing the duplex-transmission channel in accordance with a multiple-access method and a plurality of subscriber stations can effect an exchange of information with the central arrangement, characterized in that to initiate their outgoing transmissions, the subscriber stations transmit a reduced identification code to the duplex-transmission channel and that subsequent thereto the central arrangement requests the individual subscriber stations, characterized by the reduced identification code to identify themselves one after the other by sending complete identification and consequently initiates a transmission from and to the subscriber stations.

2. A method as claimed in Claim 1, characterized in that the cental arrangement utilizes the time position of the reduced identification code as an identification of the subscriber station.

3. A method as claimed in Claim 1, characterized in that the central arrangement utilizes the type of reduced signalling code used as an identification of the subscriber station.

4. A method as claimed in Claim 1, characterized in that the central arrangement determines the receiving quality of the reduced identification code and in dependence thereon transmits or does not transmit a request for complete identification.

5. A method as claimed in Claim 1, characterized in that each transmission of information to the central arrangement is subjected to a fixed delay relative to the transmission of information to the subscriber stations.

6. A method as claimed in Claim 1, characterized in that the central arrangement determines from case to case for any transmission of information to the central arrangement a delay relative to the transmission of information to the subscriber stations and reports this delay to the subscriber stations.

7. A method as claimed in Claim 1, characterized in that the duplex-transmission channel is divided into time intervals in which free access is authorized and time intervals in which this acces is blocked and that after it has received a request for complete identification a subscriber station effects this identification and also the further transmission of information only during the time intervals in which free access is blocked.

8. A method as claimed in Claim 1, characterized in that the central arrangement transmits to the subscriber stations marks which determine in which time intervals the subscriber stations may access the duplex-transmission channel with reduced dialling codes.

9. A method as claimed in Claim 1, characterized in that the subscriber station is informed of a transmission channel which is blocked from free access, through which the subscriber station transmits its complete identification after receipt of a request to do so and through which also the further transmission of information is effected.

10. A method as claimed in Claim 1, characterized in that after an outgoing connection has been initiated, the subscriber station selects, randomly or in accordance with a defined algorithm, within a time interval authorized for free access, the exact instant at which it will start the transmission of a reduced dialling code.

11. A method as claimed in Claim 1, characterized in that the reduced dialling code used by the subscriber stations all have equal durations.

12. A method as claimed in Claim 11, characterized in that the time intervals in which the subscriber stations may access the channel with reduced dialling codes, are divided into call slots whose time duration is in a fixed ratio to the duration of the reduced dialling code.

13. A method as claimed in Claim 1, characterized in that the duplex-transmission channel is divided in each transmission direction into a sequence of time slots.

14. A method as claimed in Claim 1, characterized in that the request for complete identification made to a subscriber station which has reported itself by means of a reduced dialling code, is part of any transmission outgoing from the central arrangement.

**Revendications**

1. Procédé pour accéder aux canaux de transmission d'un système de télécommunication comportant au moins un dispositif central avec au moins un canal de transmission duplex pour la transmission de la signalisation et plusieurs postes d'abonnés indépendants les uns des autres, selon lequel les postes d'abonnés peuvent accéder au canal de transmission duplex selon un procédé d'accès multiple et plusieurs postes d'abonnés peuvent procéder à un échange d'informations avec le poste central sur le canal de transmission duplex, caractérisé en ce que les postes d'abonnés, en vue d'amorcer leurs transmissions, occupent le canal de transmission duplex par des signaux befs de signalisation et ensuite, le dispositif central invite successivement les postes d'abonnés caractérisés par les signaux brefs de signalisation à s'identifier complètement et amorce ainsi une transmission d'information à partir des postes d'abonnés et vers ceux-ci.

2. Procédé suivant la revendication 1, caractérisé en ce que la situation dans le temps du signal bref de signalisation est utilisée par le dispositif central à titre de caractéristique du poste d'abonné.

3. Procédé suivant la revendication 1, caractérisé en ce que le type de signal bref de signalisation est utilisé par le dispositif central à titre de caractéristique du poste d'abonné.

4. Procédé suivant la revendication 1, caractérisé en ce que le dispositif central détermine la qualité de réception du signal bref de signalisation et, en fonction de celle-ci, émet ou non une invitation à une identification complète.

5. Procédé suivant la revendication 1, caractérisé en ce que chaque transmission d'information en direction du dispositif central présente un retard fixe par rapport à la transmission d'information en direction des postes d'abonnés.

6. Procédé suivant la revendication 1, caractérisé en ce qu'un retard par rapport à la transmission d'information en direction des postes d'abonnés est établi par le dispositif central, cas par cas, pour chaque transmission d'information en direction du dispositif central et est communiqué aux postes d'abonnés.

7. Procédé suivant la revendication 1, caractérisé en ce que le canal de transmission duplex est subdivisé en durées autorisées et interdites pour des accès libres et en ce qu'un poste d'abonné, après réception de l'invitation à une identification complète, n'entreprend cette identification ainsi que la transmission ultérieure de l'information que pendant les durées interdites aux accès libres.

8. Procédé suivant la revendication 1, caractérisé en ce que le dispositif central émet en direction des postes d'abonnés des marques qui déterminent les durées pendant lesquelles les postes d'abonnés peuvent effectuer par des signaux brefs de signalisation, un accès au canal de transmission duplex.

9. Procédé suivant la revendication 1, caractérisé en ce qu'au poste d'abonné est indiqué un canal de transmission interdit aux accès libres, sur lequel le poste d'abonné émet, après réception de l'invitation, une identification complète et sur lequel la transmission d'information ultérieure a également lieu.

10. Procédé suivant la revendication 1, caractérisé en ce que le poste d'abonné, en vue d'amorcer une liaison dont il est l'origine, sélectionne, dans les limites d'une durée autorisée pour des accès libres, de manière, aléatoire ou selon un algorithme défini, le moment précis auquel il entame la transmission d'un signal bref de signalisation.

11. Procédé suivant la revendication 1, caractérisé en ce que les signaux brefs de signalisation utilisés par les postes d'abonnés présentent tous la même durée.

12. Procédé suivant la revendication 11, caractérisé en ce que les durées pendant lesquelles les postes d'abonnés peuvent accéder par des signaux brefs de signalisation, sont subdivisées en tranches d'appel dont la longueur dans le temps présente une relation fixe avec la durée des signaux brefs de signalisation.

13. Procédé suivant la revendication 1, caractérisé en ce que le canal de transmission duplex est subdivisé, dans chaque direction de transmission, en une succession de tranches de temps.

14. Procédé suivant la revendication 1, caractérisé en ce l'invitation à l'identification complète adressée à un poste d'abonné qui s'est annoncé par un signal bref de signalisation, fait partie d'une transmission quelconque partant du dispositif central.

ZS

Mk        Mk        Mk

R-R | | Mld | Mld | Mld | Mld | Mld | Mld | |

H-R | | | | | | | | |

**Fig. 1**

X        X+1        X+2

R-R | |Sp| |Er| |Sp| |Sp| |

X-2        X-1        X

H-R | | | | | |Sk|Y| |

R-R | |Sp| |XY| |Sp| |Sp| |

H-R | | | | ID (XY) | |

**Fig. 2**

Fig. 3a

Fig. 3b

Fig. 3c

Er | * | Er | * | Sp | Mld | Er | Mld | 12 | Mld | 17 | Mld | 25 | * | 44 | UMQ Tln 13756 | Er | WAF Tln 25139 | Sp | AMQ Tln 14512 | 48 | UMQ Tln 71135 | Er

* | 1 2 3 4 5 6 7 8 | 1 2 3 4 5 6 7 8 | * | 1 2 3 4 5 6 7 8 | IDU (12) Tln 13756 | IDG (17) Tln 25139 | IDA (25) Tln 14512 | IDU (44) Tln 71135 | 1 2 3 4 5 6 7 8 | WÜT Tln 25139

Tln 13756
Tln 25139
Tln 14512
Tln 71135
Tln 44267
Tln 53919

Mld | 96 | WLQ Tln 25139 | Er | WAF Tln 44267 | Sp | Mld | 23 | WAF Tln 53919 | Sp | Mld | Er | WLQ Tln 44267 | 41 | AMQ Tln 68157 | 44 | WAF Tln 68157 | Sp | KBF Tln 25139 | Er | WLQ Tln 53919 | Er | UMQ Tln 39

IDG (48) Tln 44267 | 1 2 3 4 5 6 7 8 | IDG (96) Tln 53919 | 1 2 3 4 5 6 7 8 | WÜT Tln 44267 | IDG (23) Tln 68157 | WÜT Tln 53919 | 1 2 3 4 5 6 7 8 | IDU (41) Tln 39431 | IDA (44) Tln 56055 | WÜT Tln 68157 | 1 2 3 4

Tln 68157
Tln 39431
Tln 56055

Fig. 4